(19) Europäisches Patentamt
European Patent Office
Office européen des brevets

(11) Publication number: 0 197 682
A2

# (12) EUROPEAN PATENT APPLICATION

(21) Application number: 86301987.3

(22) Date of filing: 18.03.86

(51) Int. Cl.$^4$: C 08 F 299/06
C 08 F 220/36, C 08 F 220/14

(30) Priority: 28.03.85 GB 8508110

(43) Date of publication of application:
15.10.86 Bulletin 86/42

(84) Designated Contracting States:
AT BE CH DE FR GB IT LI LU NL SE

(71) Applicant: IMPERIAL CHEMICAL INDUSTRIES PLC
Imperial Chemical House Millbank
London SW1P 3JF(GB)

(72) Inventor: Howard, Robert David
26 The Loont
Winsford Cheshire CW7 1EU(GB)

(74) Representative: Stephenson, Kenneth et al,
Imperial Chemical Industries PLC Legal Department: Patents PO Box 6 Bessemer Road
Welwyn Garden City Herts, AL7 1HD(GB)

## (54) Polymerisable composition.

(57) A polymerisable composition comprising an unsaturated urethane, methyl methacrylate and a low profile additive characterised in that the weight ratio of unsaturated urethane to methyl methacrylate is in the range from 3:7 to 3:2 and the low profile additive has a heat distortion temperature in the range from 50 to 150°C.

EP 0 197 682 A2

Croydon Printing Company Ltd.

POLYMERISABLE COMPOSITIONS

This invention relates to polymerisable compositions which comprise unsaturated urethanes, to processes for the polymerisation thereof and to the products of such processes.

In our European Patent Specification No. 0,064,809A, there are disclosed polymerisable compositions which comprise (a) certain polyurethane polyacrylates or polymethacrylates, (b) methyl methacrylate as comonomer and, optionally (c) certain organic polymers which are useful in at least reducing shrinkage during polymerisation of the polymerisable compositions.

Where such organic polymers are present in the aforesaid polymerisable compositions, products can be prepared by the polymerisation thereof which exhibit little or no polymerisation shrinkage. However, such products exhibit a "whitening" effect which, it is believed, is the result of the generation of micron-sized voids throughout the products during the polymerisation. Furthermore, where the polymerisable compositions also contain a dark pigment, an often undesirable decrease in pigmentation occurs and pastel-shaded products are produced.

We have now found that by the careful choice of composition and polymerisation conditions, products may be obtained which (a) exhibit little or no polymerisation shrinkage, (b) have an integral skin on a core containing voids and (c) appear to be substantially free of whitening and/or, where pigments are present, to show little or no decrease in pigmentation.

According to a first aspect of the present invention there is provided a polymerisable composition comprising an unsaturated urethane, methyl methacrylate and a low profile additive characterised in that the weight ratio of unsaturated urethane to methyl methacrylate is in the range from 3:7 to 3:2 and the low profile additive has a heat distortion temperature in the range from 50 to 150°C.

By "heat distortion temperature" we mean a heat distortion temperature measured under the conditions specified in ASTM D648-82 at a load of 1.82 $MNm^{-2}$.

According to a second aspect of the present invention there is provided a process for the preparation of a product in the form of a core which contains voids and an integral skin thereon which process comprises the step of curing a polymerisable composition as defined in the first aspect of the present invention in a mould which is at a temperature between 40°C and 100°C when the polymerisable composition is charged thereto.

According to a third aspect of the present invention there is provided a product which comprises a copolymer of an unsaturated urethane and methyl methacrylate and a low profile additive characterised in that it is in the form of a core which contains voids and an integral skin thereon.

The unsaturated urethane of which the polymerisable composition according to the first aspect of the present invention is comprised is a polyurethane polyacrylate or polymethacrylate resin derived from a hydroxyalkyl acrylate or methacrylate by reaction of the hydroxyl groups thereof with the isocyanate groups of a polyisocyanate free from urethane groups and having an isocyanate functionality greater than 2.0.

The hydroxyalkyl acrylate or methacrylate preferably contains from 2 to 4 carbon atoms in the hydroxyalkyl group; 2-hydroxyethyl and 2-hydroxypropyl acrylates and methacrylates are especially preferred.

The polyisocyanates especially preferred are polymethylene polyphenyl polyisocyanates. However, we do not exclude the possibility that it may be derived from an alternative aromatic isocyanate, e.g. a toluene di-isocyanate, or even an aliphatic or alicyclic iso-cyanate, e.g. hexamethylene diisocyanate or 4,4'-(di-isocyanato)-dicyclohexylmethane.

The isocyanate functionality (i.e. average number of isocyanate groups per molecule) of the polyisocyanate employed is preferably at least 2.2, and more preferably is in the range from 2.5 to 3.0. The polyisocyanate may be an individual polyisocyanate or may be a mixture of polyisocyanates having an average functionality as specified herein.

The unsaturated urethanes of which polymerisable compositions according to the present invention are comprised may be prepared by reaction of the hydroxyalkyl acrylate or methacrylate with a polyisocyanate of functionality greater than 2.0 using methods conventional in the art for the preparation of polyurethanes.

Mixtures of two or more hydroxyalkyl acrylates and/or methacrylates may be used if desired.

The relative proportions of the reactants employed are preferably such as to provide at least 1 mole of the hydroxyalkyl acrylate or methacrylate per isocyanate group. Excess (unreacted) hydroxyalkyl

acrylate or methacrylate is in general not objectionable in the reaction product since any such excess monomer may in many cases simply be incorporated in the copolymer produced in the subsequent copolymerisation process. The extent of any excess of hydroxyalkyl acrylate or methacrylate will therefore be determined in practice by economic considerations and the desirability or otherwise of incorporating the particular hydroxyalkyl acrylate or methacrylate in the final copolymer.

Catalysts used in the reaction between the hydroxyalkyl acrylate or methacrylate and the polyisocyanate may be those known in the art of polyurethane production, for example tertiary amines and metal salts, especially di-n-butyl-tin dilaurate.

The reaction between the hydroxyalkyl acrylate or methacrylate and the polyisocyanate is preferably carried out in the presence of an inert liquid diluent. A wide range of diluents may be used but most conveniently, in order to avoid the need for separation of the unsaturated urethane the reaction is carried out in the presence of methyl methacrylate as diluent.

The methyl methacrylate used in polymerisable compositions according to the present invention is conveniently of a commercial grade, typically containing a trace amount of a suitable stabiliser, e.g. about 60 ppm of hydroquinone.

Low profile additives of which polymerisable compositions according to the first aspect of the present invention are comprised are organic polymers, preferably thermoplastics. It is preferred that low profile additives are soluble in the unsaturated

urethane/methyl methacrylate mixture and that, under appropriate conditions, methyl methacrylate is soluble in particles of the low profile additive. It is not necessary however that the total amount of the low profile additive present in the polymerisable composition is completely soluble in the unsaturated urethane/methyl methacrylate mixture, i.e. it is not necessary that the uncured low profile additive/ unsaturated urethane/methyl methacrylate mixture form a homogeneous liquid, in some cases two distinct liquid phases may be formed. However, those mixtures which separate into two liquid phases on long term standing are only useful if the phases are mixed thoroughly just before the mixture is used. Preferably the low profile additive has a heat distortion temperature as hereinbefore defined in the range from 60°C to 100°C, for example from 75°C to 100°C.

As examples of suitable low profile additives may be mentioned inter alia vinyl chloride/vinyl acetate copolymers, polystyrenes, saturated polyesters, saturated polyester/polyvinyl chloride blends or preferably methacrylate homo or copolymers or more preferably butylacrylate/methyl methacrylate copolymers, e.g. in weight ratio 1:9.

Typically, the proportion of low profile additive in polymerisable compositions according to the present invention may be from 1 to 25 parts by weight (especially from 5 to 15 parts) per 100 parts by weight of the mixture of methyl methacrylate and unsaturated urethane.

Polymerisable compositions according to the present invention may optionally contain an inorganic filler. Where such a filler is present it may be in particulate, plate-like or fibrillar form. Suitable

fillers include silica, calcium carbonate, talc, alumina trihydrate, mica, various clays and vermiculite. Glass fibre, either in continuous or chopped strand form or, for example, of aspect ratio from 10/1 to 500/1 (especially from 20/1 to 300/1) may be used as filler.

Where an inorganic filler is present in polymerisable compositions according to the present invention, the weight ratio of unsaturated urethane, methyl methacrylate and low profile additive to inorganic filler is greater than 1:2 and often is about 2:1.

When an inorganic filler is used, a suitable "coupling agent" may in some cases advantageously by incorporated to link the filler to the polymer matrix. Thus, for example, when the filler is silica a suitable silane coupling agent may be incorporated, for example $\gamma$-methacrylyl-oxypropyltrimethoxysilane.

Other additives such as plasticisers and colourants known in the art may also be incorporated into polymerisable compositions according to the present invention.

The polymerisation of polymerisable compositions according to the present invention may be carried out using techniques well known in the art of bulk polymerisation. The polymerisation catalyst is preferably a peroxide catalyst.

By "peroxide" for use in the present invention we mean an organic peroxide having the formula

R-O-O-R

in which the groups R, which may be the same or different, are hydrogen, alkyl, aryl or acyl groups, no

more than one of the groups R being hydrogen. The term acyl means groups having the formula

$$R'-CO-$$

in which R' is an alkyl, aryl, alkoxy or aryloxy group or substituted derivatives thereof. A preferred peroxide is dibenzoyl peroxide or a derivative thereof, e.g. 4,4'-dichloro-dibenzoyl peroxide.

The peroxide is used in conjunction with an accelerator which is preferably a tertiary amine, e.g. N,N-dimethyl aniline or preferably N,N-dimethyl-p-toluidine, although we do not exclude the possibility that the accelerator may be a transition metal, e.g. copper, manganese or cobalt.

The concentrations of the catalyst and accelerator will be chosen in the light of the thickness of the polymerisation product. Where benzoyl peroxide is used in conjunction with N,N-dimethyl-p-toluidine we have found that for products having a thickness of about 6 mm the concentrations of benzoyl peroxide and N,N-dimethyl-p-toluidine, based on the total weight of unsaturated urethane, methyl methacrylate, low profile additive, catalyst, and accelerator, are preferably in the ranges from 0.8 to 2.0% w/w and from 0.16 to 0.66% w/w respectively; and for products having a thickness of about 3 mm the concentrations are in the ranges from 1.5 to 2% w/w and from 0.4 to 0.66% w/w respectively.

Preferably the initial mould temperature is in the range from 75°C to 90°C, since we have found that the use of an initial mould temperature falling within the aforesaid range leads to the production of products of improved surface gloss. Furthermore, volume shrinkage is decreased as the initial mould temperature is increased, within this range.

A particularly desirable use for polymerisation compositions according to the present invention is for the production of fibre-reinforced composites, especially glass-fibre-reinforced composites, by automated processes.

In such processes, for example closed mould processes using matched male and female moulds, glass fibre reinforcement (which may be chopped strand mat, continuous filament mat, woven continuous filament mat or any other variation of mat) is placed in one half of the mould, the mould is closed and resin is caused to flow through and wet-out the glass-fibre reinforcement either by sucking resin through by applying a vacuum to the closed mould cavity, or by pumping the resin through, or by a combination of vacuum-assisted pumping. Alternatively, liquid resin may be placed in the female half of the mould and the act of mould closure itself causes the resin to flow through the glass fibre.

For improved efficiency and speed in such processes it is advantageous that the resin shall flood and wet-out the fibrous reinforcement rapidly, shall minimise "washing" of glass fibre (a term used in the industry to describe movement of glass-fibre caused by the flow of resin), and shall flow through the fibrous reinforcement under the minimum of pressure. These advantages are more readily obtained when the resin has low viscosity. Furthermore, it is desirable that, once the mould cavity is filled with resin, the resin shall polymerise rapidly to a product stiff enough and strong enough to be demoulded. It is an advantage of the polymerisable compositions according to the present

invention that they often have very low viscosities and may be used without compromising the rapid polymerisation characteristics.

In general, it is preferred that the viscosity of the mixture of unsaturated urethane, methyl methacrylate and low profile additive is not above 500 centipoise; it is particularly preferred that the viscosity is not above 250 centipoise; and it is more particularly preferred that the viscosity is in the range from 25 to 150 centipoise. (Viscosities through-out this specification are as measured at 20°C with a Brookfield viscometer at 60 rpm; 1 centipoise = 1 mPa.s).

In such moulding processes, it is often desirable that the time required for polymerisation is less than 15 minutes, preferably 5 minutes or less (if possible less than two minutes).

Polymerisable compositions according to the present invention may also be used in compression moulding processes, for example as dough moulding compounds or sheet moulding compounds.

Polymerisable compositions according to the present invention can also be used in pultrusion processes.

The products according to the third aspect of the present invention are typically in the form of sheet products in the form of a core, which contains voids, sandwiched between two skins, both of which are homogeneous and integral with the core. However, we do not exclude the possibility that the product may have one of a variety of shapes, e.g. a tube which has an inner and an outer skin on a core or a solid rod.

The invention is illustrated by the following examples.

EXAMPLES 1-5

A polyisocyanate having an average functionality of 2.6 (Suprasec (RTM) DND, ex ICI; 186 grams) and 2-hydroxyethyl methacrylate (186 grams; containing 300 ppm p-methoxyphenol) were dissolved in methyl methacrylate (536 grams; containing 60 ppm hydroquinone). Benzoquinone (0.1 gram) was dissolved in the solution. A copolymer (91 grams) of butyl acrylate and methyl methacrylate in a weight ratio of 1:9 was dispersed, by stirring, in the solution. Dibutyl tin dilaurate (1.6 grams) was added to the dispersion. The reaction temperature rose to 75°C and the copolymer dissolved in the reaction mixture. After 1 hour the reaction was judged to be complete, from the isocyanate content, and a clear solution was obtained (hereinafter referred to for convenience as "Resin A".

60% w/w Benzoyl peroxide paste (3.33 grams) was dissolved in Resin A (100 grams) and alumina trihydrate (54 grams) was added to the resulting solution producing a dispersion. N,N-dimethyl-p-toluidine (0.4 grams) was added to the dispersion at 20°C and within 5 seconds it was poured into a mould (consisting of two 5 mm thick glass plates, separated by a rubber gasket and held together by spring clips so that the distance between the inside faces of the plates was 6.5 mm) which had been heated to, and was maintained at, the desired initial moulding temperature in a thermostatically controlled water bath.

During polymerisation, the temperature of the polymerisable composition increased and when the peak temperature was reached the cured product was removed from the mould.

The results are shown in Table 1 from which it can be seen that as the initial mould temperature is increased, volume shrinkage is reduced and the quality of the surface finish of the product is increased; and that at initial mould temperatures outside the range of the initial mould temperatures defined in the second aspect of the present invention, volume shrinkage is high and surface finish is poor.

Table 1

| Example No | Initial Mould Temperature °C | Volume Shrinkage % | Surface Finish |
|---|---|---|---|
| 1 | 40 | 5.2 | Good skin |
| 2 | 50 | 3.9 | " |
| 3 | 60 | 2.3 | " |
| 4 | 75 | 1.8 | Excellent gloss Glassy surface |
| 5 | 85 | 0.1 | " |
| CT1 | 16 | 10.0 | No gloss Poor surface |
| CT2 | 30 | 9.0 | " |

CT1 : Comparative test
CT2 : " "

EXAMPLES 6-11

Mixtures of Resin A (100 grams) and alumina trihydrate (54 grams) were polymerised under a range of catalyst/accelerator concentrations using the procedure described in Examples 1-5.

The results are given in Table 2.

Table 2

| Ex No. | Initial Mould Temperature (°C) | Concentration of BPO (% w/w based on M824) | Concentration of DMPT (% w/w based on M824) | Volume Shrinkage (%) | Core Whitening | Integral Skin |
|---|---|---|---|---|---|---|
| 6 | 40 | 1.0 | 0.2 | 5.5 | Yes | Yes |
| 7 | 40 | 2.0 | 0.4 | 5.2 | " | " |
| 8 | 60 | 1.0 | 0.2 | 1.9 | " | " |
| 9 | 60 | 2.0 | 0.4 | 2.3 | " | " |
| 10 | 70 | 1.0 | 0.2 | 0.1 | " | " |
| 11 | 75 | 2.0 | 0.4 | 1.8 | " | " |

BPO : Benzoyl peroxide

DMPT : N,N-dimethyl-p-toluidine.

EXAMPLES 12-13

The procedure of Examples 6-11 was repeated except that the distance between the inside faces of the glass plates was 3.5 mm instead of 6.5 mm, and the glass plates were 9 mm thick instead of 5 mm.

From Table 3, it can be seen that for the compositions and conditions examined, catalyst and accelerator concentrations of at least 2.0 % w/w and 0.4% w/w respectively and an initial mould temperature of more than 60°C are required to obtain a product with a whitened core and an integral skin.

Table 3

| Ex No. | Initial Mould Temperature (°C) | Concentration of BPO (% w/w based on Resin A) | Concentration of DMPT (% w/w based on Resin A) | Volume Shrinkage (%) | Core Whitening | Integral Skin |
|---|---|---|---|---|---|---|
| 12 | 61 | 2.0 | 0.4 | 6.6 | Yes | Yes |
| 13 | 81 | 2.0 | 0.4 | 0.9 | " | " |
| CT1 | 41 | 1.0 | 0.2 | 10.1 | Partial | No |
| CT2 | 40 | 2.0 | 0.4 | 10.6 | " | " |
| CT3 | 60 | 1.0 | 0.2 | 4.1 | Yes | " |
| CT4 | 83 | 1.0 | 0.2 | 1.5 | " | " |

BPO : Benzoyl peroxide
DMPT : N,N-dimethyl-p-toluidine
CT1-4 : Comparative tests

EXAMPLES 14-15

The procedure described in Examples 1-5 was repeated except that the concentration of the alumina trihydrate filler was varied.

The results are shown in Table 4

From Table 4 it can be seen that for the particular unsaturated urethane/methyl methacrylate mixture used, ATH at concentrations of 150 and 233 phr w/w based on Resin A does not give products according to the third aspect of the present invention.

Table 4

| Ex No | Initial Mould Temperature | ATH (phr w/w based on Resin A) | Core Whitening | Integral Skin |
|---|---|---|---|---|
| 14 | 60 | 54 | Yes | Yes |
| 15 | 60 | 100 | " | " |
| CT1 | 61 | 150 | Partial | No |
| CT2 | 60 | 233 | No | No |

ATH : Alumina trihydrate
CT1-2 : Comparative tests

EXAMPLE 16

The procedure of Examples 1-5 was repeated except that the ratio of unsaturated urethane to methyl methacrylate was varied.

The results are shown in Table 5.

From Table 5 it can be seen that for the particular unsaturated urethane used, an unsaturated urethane concentration between 27.27 and 54.55 parts by weight is required to produce a product according to the third aspect of the present invention.

Table 5

| Ex No | Initial Mould Temperature °C | Unsaturated Urethane (parts by weight)[a] | Initiator System | Core Whitening | Integral Skin |
|---|---|---|---|---|---|
| 16 | 81 | 36.36 | A | Yes | Yes |
| CT1 | 80 | 27.27 | A | Yes | Partial |
| CT2 | 70 | 54.55 | B | No | No |

a : Parts by weight per 100 parts by weight of the mixture of unsaturated urethane, methyl methacrylate and low profile additive.

A : % w/w based on Resin A : benzoyl peroxide, 2.0; N,N-dimethyl-p-toluidine, 0.4.

B : As A, except that the concentration of N,N-dimethyl-p-toluidine was 0.1 instead of 0.4.

CT1-2 : Comparative tests.

EXAMPLE 17

Resin A (100 parts by weight) was mixed with calcium carbonate (54 parts by weight), N,N-dimethyl-p-toluidine (0.5 parts of weight) and blue pigment paste (3.0 parts by weight). The resulting mixture was pumped to a static mixing head where it was mixed with a benzoyl peroxide emulsion (4.17 parts) which had been pumped separately to the mixing head. The emulsion contained 36% w/w of active benzoyl peroxide. After passing through the mixing head, the blue mixture was injected into a mould formed from two 500 mm X 500 mm X 4 mm steel plates and rubber gasket which contained two plies of 450 grams/metre$^2$ continuous filament mat. The mould was sealed and both halves of the mould were heated to 75°C by hot water circulating through the channels in the plates.

Injection was completed in 10 seconds. One minute after injection was complete, the moulding was cured and the mould clamps were released to facilitate recovery of the moulding.

The moulding has an excellent surface finish free from surface waviness and with a good gloss. The moulding also exhibited an unexpanded skin (approximately 1 mm thick) on both faces and an expanded core. The dark blue pigmentation was retained at the surface whereas the core was a pastel blue.

EXAMPLE 18

A polyisocyanate having an average functionality of 2.6 ('Suprasec' (RTM) DND, ex ICI; 186 grams) and 2-hydroxyethyl methacrylate (186 grams; containing 300 ppm p-methoxy phenol) were dissolved in methyl methacrylate (536 grams; containing 60 ppm hydroquinone. Benzoquinone (0.1 gram) was dissolved in the solution. Dibutyl tin dilaurate (1.6 grams) was added to the solution. The reaction temperature rose to 75°C and after 1 hour the reaction was judged to be complete from the isocyanate content. To the product was added a copolymer (91 grams) of vinyl chloride and vinyl acetate in a weight ratio 6.14:1 (Corvic (RTM) C4812, ex ICI). The dispersion was heated at 70°C with stirring for 1 hour during which time the copolymer dissolved to produce a clear solution (hereinafter referred to for convenience as Resin B).

60% w/w benzoyl peroxide paste (2.5 grams) was dissolved in Resin B (100 grams) and N,N-dimethyl-p-toluidine (0.5 grams) was added to the solution at 20°C. Within 5 seconds the solution was poured into a

mould (consisting of two 9 mm thick chrome-plated steel plates, separated by a rubber gasket and held together by spring clips so that the distance between the inside faces of the plates was 3 mm) which had been heated to, and was maintained at, 60°C in a thermostatically controlled water bath. During polymerisation, the temperature of the polymerisable composition increased and when the peak temperature was reached the cured product was removed from the mould.

The product had two glossy surfaces and the volume shrinkage due to polymerisation was 2.8%. The product also exhibited an integral skin on both sides of the voided core.

CLAIMS

1. A polymerisable composition comprising an unsaturated urethane, methyl methacrylate and a low profile additive characterised in that the weight ratio of unsaturated urethane to methyl methacrylate is in the range from 3:7 to 3:2 and the low profile additive has a heat distortion temperature in the range from 50 to 150°C.

2. A polymerisable composition according to Claim 1 wherein the unsaturated urethane is a polyurethane polyacrylate or polymethacrylate resin derived from a hydroxyalkyl acrylate or methacrylate by reaction of the hydroxyl groups thereof with the isocyanate groups of a polyisocyanate free from urethane groups and having an isocyanate functionality greater than 2.0.

3. A polymerisable composition according to Claim 2 wherein the hydroxyalkyl acrylate or methacrylate contains from 2 to 4 carbon atoms in the hydroxyalkyl group.

4. A polymerisable composition according to Claim 2 wherein the polyisocyanate free from urethane groups is a polymethylene polyphenyl polyisocyanate.

5. A polymerisable composition according to Claim 2 wherein the isocyanate functionality of the polyisocyanate is in the range from 2.5 to 3.0.

6. A polymerisable composition according to Claim 1 wherein the low profile additive is an organic polymer.

7. A polymerisable composition according to Claim 1 wherein the low profile additive is soluble in the unsaturated urethane/methyl methacrylate mixture.

8. A polymerisable composition according to Claim 1 wherein the low profile additive has a heat distortion temperature in the range 60 to 100°C.

9. A polymerisable composition according to Claim 1 wherein the low profile additive is selected from vinyl chloride/vinyl acetate copolymers, polystyrenes, saturated polyesters, saturated polyester/polyvinyl chloride blends amd methacrylate homo- or copolymers.

10. A polymerisable composition according to Claim 1 wherein the proportion of low profile additive is from 1 to 25 parts by weight per 100 parts by weight of the mixture of methyl methacrylate and unsaturated urethane.

11. A polymerisable composition according to Claim 10 wherein the proportion of low profile additive is from 5 to 15 parts per 100 parts by weight of the mixture of methyl methacrylate and unsaturated urethane.

12. A polymerisable composition according to Claim 1 which contains an inorganic filler.

13. A process for the preparation of a product in the form of a core which contains voids and an integral skin thereon which process comprises the step of curing a polymerisable composition as defined in Claim 1 in a mould which is at a temperature between 40°C and 100°C when the polymerisable composition is charged thereto.

14. A process according to Claim 13 wherein the initial mould temperature is in the range from 75 to 90°C.